# EUROPÄISCHE PATENTSCHRIFT

(11) **EP 2 852 896 B1**
(45) Veröffentlichungstag und Bekanntmachung des Hinweises auf die Patenterteilung: **29.09.2021**
(21) Anmeldenummer: 13734076.6
(22) Anmeldetag: 04.07.2013
(51) Int. Cl.: G06F 11/16, G06F 11/14

(54) **ANORDNUNG MIT EINEM MIKROPROZESSORSYSTEM**
ARRANGEMENT HAVING A MICROPROCESSOR SYSTEM
ENSEMBLE COMPRENANT UN SYSTÈME À MICROPROCESSEUR

(30) Priorität: 13.07.2012 DE 102012212304
(43) Veröffentlichungstag der Anmeldung: 01.04.2015
(73) Patentinhaber: Siemens Mobility GmbH, 81739 München (DE)
(72) Erfinder: ECKELMANN-WENDT, Uwe, 38302 Wolfenbüttel (DE)
(86) Internationale Anmeldenummer: PCT/EP2013/064129
(87) Internationale Veröffentlichungsnummer: WO 2014/009243

(56) Entgegenhaltungen:
- GB-A- 2 353 113
- US-A1- 2004 205 377
- AVIZIENIS A ET AL: "FAULT TOLERANCE BY DESIGN DIVERSITY: CONCEPTS AND EXPERIMENTS", COMPUTER, IEEE, US, Bd. 17, Nr. 8, 1. August 1984 (1984-08-01) , - 31. August 1984 (1984-08-31), Seiten 67-80, XP000743069, ISSN: 0018-9162, DOI: 10.1109/MC.1984.1659219
- None

## Beschreibung

Die Erfindung bezieht sich auf eine Anordnung mit den Merkmalen gemäß dem Oberbegriff des Patentanspruchs 1.

Eine derartige Anordnung ist aus der deutschen Offenlegungsschrift DE 197 16 197 A1 bekannt. Bei dieser Anordnung ist ein Mikroprozessorsystem vorgesehen, das derart programmiert ist, dass eine redundante Datenverarbeitung erfolgt. Hierzu wird das gleiche Nutzprogramm zumindest zweimal ausgeführt, und es werden mit einem Vergleichsbaustein die Ergebnisse der zumindest zwei Programmausführungen miteinander verglichen.

Aus der Druckschrift US 2004/205377 A1, ist ein Fehlertoleranzsystem mit verschiedenen Prozessknoten, die sich hinsichtlich bestimmter Konfigurationen (Hardwarekonfiguration, Softwarekonfiguration, Konfiguration externer Geräte, Konfiguration eines Programmstartups) unterscheiden, bekannt. Dabei schließt die Hardwarekonfiguration Prozessortypen ein. Die Prozessknoten weisen jeweils einen Prozessor auf und führen das gleiche Programm aus. Die Knoten können als virtuelle Maschinen ausgeführt sein. Hierzu wird auf einem physischen Computer ein Kontrollprogramm in Form eines sogenannten virtual machine monitors (kurz VVM) - also ein Hypervisor - ausgeführt.

Auch aus den Druckschriften GB 2 353 113 A und AVIZIENIS A ET AL: "FAULT TOLERANCE BY DESIGN DIVERSITY: CONCEPTS AND EXPERIMENTS", COMPUTER, IEEE, US, Bd. 17, Nr. 8, 1. August 1984 sind Fehlertoleranzsysteme bekannt.

Der Erfindung liegt die Aufgabe zugrunde, eine Anordnung anzugeben, bei der ein Fehlverhalten besonders zuverlässig erkannt werden kann.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass das Mikroprozessorsystem derart programmiert ist, dass auf diesem zumindest zwei Emulatoren unterschiedliche Mikroprozessoren softwaremäßig nachbilden, jeder der zumindest zwei nachgebildeten Mikroprozessoren das gleiche Nutzprogramm mikroprozessorindividuell ausführt, die Ergebnisse der zumindest zwei nachgebildeten Mikroprozessoren mit dem Vergleichsbaustein verglichen werden und die zumindest zwei Emulatoren jeweils derart programmiert sind, dass die durch sie nachgebildeten Mikroprozessoren beim Abspeichern und Auslesen von Daten in oder aus einem Speicherbereich jeweils eine Adressstruktur verwenden, die sich von der Adressstruktur zumindest eines der anderen nachgebildeten Mikroprozessoren, vorzugsweise von der Adressstruktur aller anderen nachgebildeten Mikroprozessoren, unterscheidet, und jeweils eine Datenstruktur verwenden, die sich von der Datenstruktur zumindest eines der anderen nachgebildeten Mikroprozessoren, vorzugsweise von der Datenstruktur aller anderen nachgebildeten Mikroprozessoren, unterscheidet.

Ein wesentlicher Vorteil der erfindungsgemäßen Anordnung ist darin zu sehen, dass aufgrund des Einsatzes unterschiedlicher Emulatoren, die unterschiedliche Mikroprozessoren softwaremäßig nachbilden, ein spontanes Fehlverhalten von Hardware zuverlässig erkannt werden kann. Dies ist darauf zurückzuführen, dass eine unterschiedliche Abarbeitung des Nutzprogramms durch die beiden nachgebildeten Mikroprozessoren erfolgt, weil sich die nachgebildeten Mikroprozessoren voneinander unterscheiden, so dass ein Fehlverhalten von Hardware zu unterschiedlichen Zwischenergebnissen bzw. zu unterschiedlichen Ausgangssignalen führen wird. Ein spontanes Fehlverhalten kann somit sehr zuverlässig erkannt werden.

Um Fehler im Hardwarebereich von Speichern erkennen zu können, wird es als vorteilhaft angesehen, wenn den nachgebildeten Mikroprozessoren jeweils ein Speicherbereich individuell zugeordnet ist.

Das Mikroprozessorsystem kann beispielsweise durch einen einzelnen Prozessor gebildet sein, der in einem Multitasking-Betrieb zwei Emulationsprogramme quasi gleichzeitig durchführt und dabei zumindest zwei Mikroprozessoren nachbildet. Mit Blick auf eine besonders hohe Sicherheit bei der Fehlererkennung wird es jedoch als vorteilhaft angesehen, wenn das Mikroprozessorsystem zumindest zwei oder mehr Einzelprozessoren und/oder zumindest zwei oder mehr Prozessorkerne aufweist, die parallel und unabhängig voneinander arbeiten.

Mit Blick auf geringe Kosten der Anordnung wird es als vorteilhaft angesehen, wenn das Mikroprozessorsystem einen Multikernprozessor umfasst, der zumindest zwei Prozessorkerne aufweist. Vorzugsweise führt jeder Prozessorkern jeweils einen individuell zugeordneten Emulator aus.

Als besonders vorteilhaft wird es angesehen, wenn die Prozessorkerne, die einen Emulator ausführen, jeweils einen Mikroprozessor nachbilden, der sich von den nachgebildeten Mikroprozessoren eines jeden der anderen Prozessorkerne unterscheidet.

Mit Blick auf eine optimale Arbeitsweise des Vergleichsbausteins wird es als vorteilhaft angesehen, wenn die zumindest zwei Emulatoren von den jeweils individuell zugeordneten Prozessorkernen parallel ausgeführt werden, jeweils in denselben vorgegebenen Zeitfenstern Eingangsparameter einlesen und jeweils in denselben vorgegebenen Zeitfenstern Ergebnisse an den Vergleichsbaustein ausgeben. Vorzugsweise sind die Emulatoren derart programmiert, dass sie einen regelmäßigen oder zyklischen Vergleich der Ergebnisse der von ihnen nachgebildeten Prozessoren durch den Vergleichsbaustein ermöglichen. Eine zur Synchronisation der Emulatoren bzw. der durch sie nachgebildeten Mikroprozessoren dienende "Uhr" kann beispielsweise durch den Vergleichsbaustein gebildet werden.

Die Erfindung bezieht sich darüber hinaus auf ein Verfahren zum Betreiben einer Anordnung mit einem Mikroprozessorsystem, wobei bei dem Verfahren eine redundante Datenverarbeitung erfolgt, indem das gleiche Nutzprogramm zumindest zweimal ausgeführt wird, und die Ergebnisse der zumindest zwei Programmausführungen mit einem Vergleichsbaustein verglichen werden.

Erfindungsgemäß ist vorgesehen, dass mit dem Mikroprozessorsystem zumindest zwei Emulatoren betrieben werden und unterschiedliche Mikroprozessoren softwaremäßig nachgebildet werden, jeder der zumindest zwei nachgebildeten Mikroprozessoren das gleiche Nutzprogramm mikroprozessorindividuell ausführt, die Ergebnisse der zumindest zwei nachgebildeten Mikroprozessoren mit dem Vergleichsbaustein verglichen werden und die zumindest zwei Emulatoren jeweils derart programmiert bereitgestellt werden, dass die durch sie nachgebildeten Mikroprozessoren beim Abspeichern und Auslesen von Daten in oder aus einem Speicherbereich jeweils eine Adressstruktur verwenden, die sich von der Adressstruktur zumindest eines der anderen nachgebildeten Mikroprozessoren, vorzugsweise von der Adressstruktur aller anderen nachgebildeten Mikroprozessoren, unterscheidet, und jeweils eine Datenstruktur verwenden, die sich von der Datenstruktur zumindest eines der anderen nachgebildeten Mikroprozessoren, vorzugsweise von der Datenstruktur aller anderen nachgebildeten Mikroprozessoren, unterscheidet.

Bezüglich der Vorteile des erfindungsgemäßen Verfahrens sei auf die obigen Ausführungen im Zusammenhang mit der erfindungsgemäßen Anordnung verwiesen, da die Vorteile der erfindungsgemäßen Anordnung denen des erfindungsgemäßen Verfahrens im Wesentlichen entsprechen.

Die Erfindung wird nachfolgend anhand von Ausführungsbeispielen näher erläutert; dabei zeigen beispielhaft
- Figur 1: ein erstes Ausführungsbeispiel für eine erfindungsgemäße Anordnung, anhand derer auch das erfindungsgemäße Verfahren beispielhaft erläutert wird, wobei bei der Anordnung ein Mikroprozessorsystem zwei separate Prozessoren umfasst,
- Figur 2: ein zweites Ausführungsbeispiel für eine erfindungsgemäße Anordnung, bei der ein Mikroprozessorsystem durch einen Multikernprozessor gebildet ist, der zwei Prozessorkerne aufweist,
- Figur 3: ein drittes Ausführungsbeispiel für eine erfindungsgemäße Anordnung, bei der die Abspeicherung von Daten in einer gegenüber den Ausführungsbeispielen gemäß Figur 1 und 2 modifizierten Form erfolgt, und
- Figur 4: ein viertes Ausführungsbeispiel für eine erfindungsgemäße Anordnung, bei der ein einziger Prozessor zwei Mikroprozessoren nachbildet.

In den Figuren werden der Übersicht halber für identische oder vergleichbare Komponenten stets dieselben Bezugszeichen verwendet.

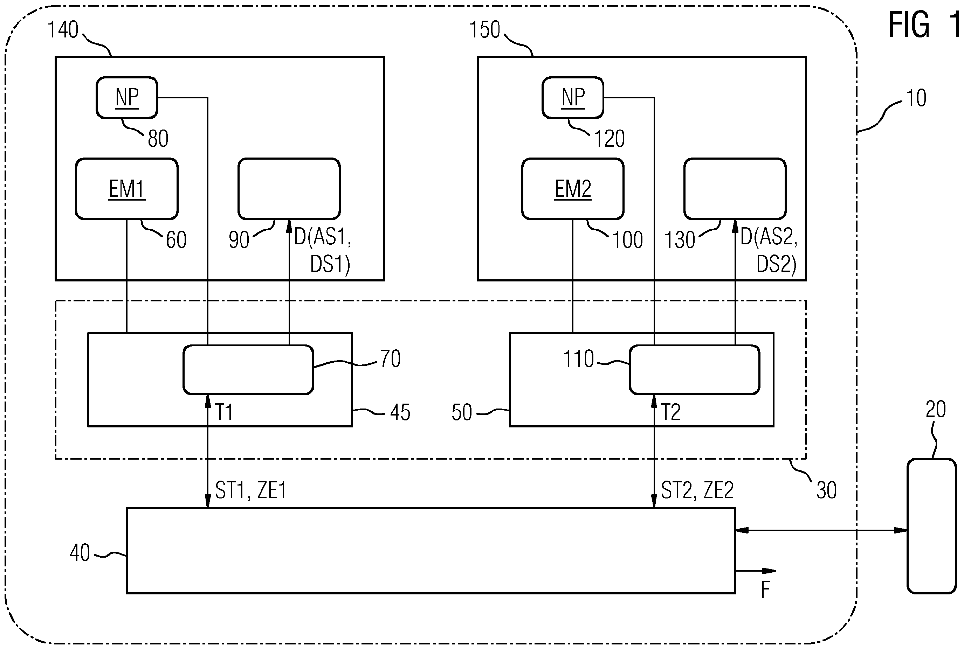

In der Figur 1 erkennt man eine Anordnung 10 zur Steuerung einer technischen Einrichtung 20, bei der es sich beispielsweise um eine Eisenbahngleisanlage oder um ein Schienenfahrzeug für eine Eisenbahngleisanlage handeln kann.

Die Anordnung 10 umfasst ein Mikroprozessorsystem 30, das über einen Vergleichsbaustein 40 mit der technischen Einrichtung 20 in Verbindung steht. Das Mikroprozessorsystem 30 weist zwei oder mehr Prozessoren auf, von denen in der Figur 1 aus Gründen der Übersicht lediglich zwei dargestellt sind, nämlich ein erster Prozessor 45 sowie ein zweiter Prozessor 50. Die beiden Prozessoren 45 und 50 können beispielsweise baugleich oder identisch sein.

Der erste Prozessor 45 führt ein Emulationsprogramm EM1 aus, das in einem Speicherbereich 60 abgespeichert ist. Durch die Durchführung des Emulationsprogramms EM1 bildet der erste Prozessor 45 einen Mikroprozessor 70 einer ersten Art, beispielsweise einen Prozessor des Typs Intel 80386.

Der durch den ersten Prozessor 45 nachgebildete Mikroprozessor 70 führt ein Nutzprogramm NP aus, bei dem es sich vorzugsweise um ein Steuerprogramm handelt, mit dem sich Steuersignale ST1 zur Steuerung der technischen Einrichtung 20 erzeugen lassen. Das Nutzprogramm NP ist bei dem Ausführungsbeispiel gemäß Figur 1 in einem Speicherbereich 80 abgespeichert.

Im Rahmen der Bearbeitung des Nutzprogramms NP durch den vom ersten Prozessor 45 nachgebildeten Mikroprozessor 70 werden Daten in einem Speicherbereich 90 abgespeichert sowie Daten aus diesem Speicherbereich 90 ausgelesen. Beim Abspeichern und Auslesen dieser Daten wird der Mikroprozessor 70 eine erste Adressstruktur AS1 sowie eine erste Datenstruktur DS1 verwenden. Die unter Berücksichtigung dieser ersten Adressstruktur AS1 und dieser ersten Datenstruktur DS1 abgespeicherten und ausgelesenen Daten sind in der Figur 1 mit dem Bezugszeichen D(AS1, DS1) bezeichnet.

Als Adressstruktur kann beispielsweise eine lineare oder transformierte, insbesondere eine verwürfelte Adressstruktur verwendet werden.

Als Datenstruktur für die Datenablage der vom Emulator verwendeten Datenwörter werden die Datenwörter transformiert, zum Beispiel durch Bitvertauschung oder arithmetische Operationen, wie beispielsweise durch Multiplizieren mit einer Primzahl.

Der zweite Prozessor 50 führt ein zweites Emulationsprogramm EM2 aus, das in einem Speicherbereich 100 abgespeichert ist. Das Emulationsprogramm EM2 unterscheidet sich von dem Emulationsprogramm EM1, das von dem ersten Prozessor 45 ausgeführt wird. Konkret wird der zweite Prozessor 50 im Rahmen der Ausführung des zweiten Emulationsprogramms EM2 einen zweiten Mikroprozessor 110 nachbilden, der sich von dem ersten Mikroprozessor 70, der von dem ersten Prozessor 45 nachgebildet wird, unterscheidet, jedoch den identischen Befehlssatz interpretiert. Der durch den zweiten Prozessor 50 durch die Emulation nachgebildete zweite Mikroprozessor 110 führt ein Nutzprogramm NP aus, das in einem Speicherbereich 120 abgespeichert ist. Das Nutzprogramm NP im Speicherbereich 120 entspricht dem Nutzprogramm NP, das in dem Speicherbereich 80 abgespeichert ist. Die beiden Nutzprogramme NP in den beiden Speicherbereichen 80 und 120 sind also gleich bzw. identisch, es handelt sich also um ein und dasselbe Nutzprogramm.

Im Rahmen der Bearbeitung des Nutzprogramms NP des Speicherbereichs 120 wird der zweite Mikroprozessor 110 Daten erzeugen, die er in einem Speicherbereich 130 abspeichert. Im Rahmen dieser Abspeicherung der Daten wird der zweite Mikroprozessor 110 eine zweite Adressstruktur AS2 sowie eine zweite Datenstruktur DS2 heranziehen, die sich von der ersten Adressstruktur AS1 und der ersten Datenstruktur DS1, die von dem ersten Mikroprozessor 70 verwendet werden, unterscheiden. Durch diese Maßnahme wird erreicht, dass die Datensätze, die in den beiden Speicherbereichen 90 und 130 abgespeichert sind, stets unterschiedlich sind, auch wenn die beiden nachgebildeten Mikroprozessoren 70 und 110 aufgrund der Abarbeitung des gleichen Nutzprogramms NP inhaltsgleiche Daten erzeugen. Aufgrund der Unterschiedlichkeit der Adressstruktur und aufgrund der Unterschiedlichkeit der Datenstruktur ist sichergestellt, dass sich Fehler beim Abspeichern und Lesen in den beiden Speicherbereichen 90 und 130 in unterschiedlicher Weise zeigen werden, so dass diese Fehler zu unterschiedlichen Ausgangssignalen und unterschiedlichen Steuersignalen ST1 und ST2 führen müssten. Entsprechendes gilt für Zwischenergebnisse ZE1 und ZE2, die von den beiden nachgebildeten Mikroprozessoren 70 und 110 zum Zwecke der Kontrolle und des Vergleichs zum Vergleichsbaustein 40 übersandt werden.

Die beiden Prozessoren 45 und 50, mit denen die beiden Mikroprozessoren 70 und 110 mittels Emulation nachgebildet werden, können baugleich oder unterschiedlich sein, wichtig ist nur, dass die beiden Prozessoren 45 und 50 unterschiedliche Mikroprozessoren bzw. Mikroprozessoren in unterschiedlicher Art nachbilden.

Die Zuordnung der Speicherbereiche 60, 80, 90, 100, 120 und 130 zu physikalischen Speicherbausteinen ist prinzipiell beliebig. Bei dem Ausführungsbeispiel gemäß Figur 1 wird es als vorteilhaft angesehen, wenn die Speicherbereiche 60, 80 und 90 in einem individuellen Speichermodul 140 und die Speicherbereiche 100, 120 und 130 in einem individuellen Speichermodul 150 vorgesehen werden, das von dem Speichermodul 140 getrennt ist.

Wie beschrieben, werden die beiden Prozessoren 45 und 50 unterschiedliche Mikroprozessoren 70 und 110 nachbilden, die das gleiche Nutzprogramm NP ausführen. Der Vergleichsbaustein 40 hat nun die Aufgabe, die von den beiden nachgebildeten Mikroprozessoren 70 und 110 ermittelten Zwischenergebnisse ZE1 und ZE2 miteinander zu vergleichen und im Falle einer etwaigen Abweichung ein Fehlersignal F zu erzeugen. In entsprechender Weise wird der Vergleichsbaustein 40 die Steuersignale ST1 und ST2 miteinander vergleichen, die von den beiden nachgebildeten Mikroprozessoren 70 und 110 gebildet werden. In dieser Weise kann der Vergleichsbaustein 40 regelmäßig bzw. zyklisch überprüfen, ob die beiden nachgebildeten Mikroprozessoren 70 und 110 bei Ausführung des gleichen Nutzprogramms NP dieselben Ergebnisse liefern.

Um einen zyklischen Vergleich der Ergebnisse durch den Vergleichsbaustein 40 zu ermöglichen bzw. zu vereinfachen, wird es als vorteilhaft angesehen, wenn der Vergleichsbaustein 40 eine Art "Grobuhr" für die beiden nachgebildeten Mikroprozessoren 70 und 110 bildet. Eine solche "Grobuhr" kann beispielsweise durch das Übermitteln von Triggersignalen T1 bzw. T2 oder entsprechender Taktsignale erfolgen, mit denen die Abarbeitung bestimmter Abschnitte des Nutzprogramms NP bei den beiden nachgebildeten Mikroprozessoren 70 und 110 ausgelöst bzw. Zwischenergebnisse ZE1 bzw. ZE2 oder Steuersignale ST1 bzw. ST2 von den beiden nachgebildeten Mikroprozessoren 70 und 110 abgefragt werden.

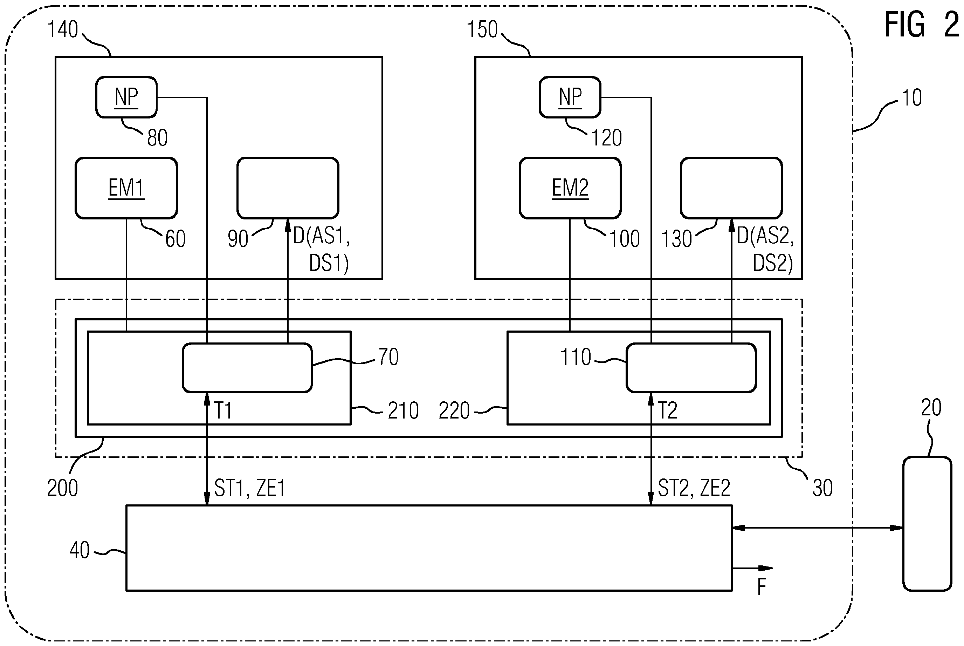

Die Figur 2 zeigt ein zweites Ausführungsbeispiel für eine Anordnung 10, die zum Steuern einer technischen Einrichtung 20 geeignet ist.

Bei dem Ausführungsbeispiel gemäß Figur 2 wird das Mikroprozessorsystem 30 durch einen Multikernprozessor 200 gebildet, der zwei oder mehr Prozessorkerne aufweist. Bei dem Ausführungsbeispiel gemäß Figur 2 sind lediglich zwei Prozessorkerne gezeigt, nämlich ein erster Prozessorkern 210 sowie ein zweiter Prozessorkern 220.

Der erste Prozessorkern 210 führt ein erstes Emulationsprogramm EM1 aus, das in einem Speicherbereich 60 abgespeichert ist. Durch den ersten Prozessorkern 210 wird somit ein erster Mikroprozessor 70 nachgebildet. Insoweit entspricht die Arbeitsweise des ersten Prozessorkerns 210 der Arbeitsweise des ersten Prozessors 45 gemäß Figur 1, so dass auf die obigen Ausführungen verwiesen sei. Der von dem ersten Prozessorkern 210 nachgebildete Mikroprozessor 70 wird in der oben beschriebenen Weise unter Heranziehung der ersten Adressstruktur AS1 und der ersten Datenstruktur DS1 Daten in einem Speicherbereich 90 abspeichern oder auslesen und dabei das Nutzprogramm NP ausführen.

Der zweite Prozessorkern 220 entspricht von seiner Arbeitsweise her dem zweiten Prozessor 50 gemäß Figur 1. Der zweite Prozessorkern 220 wird ein zweites Emulationsprogramm EM2 ausführen, das in einem Speicherbereich 100 abgespeichert ist, und einen Mikroprozessor 110 nachbilden. Die Arbeitsweise des nachgebildeten Mikroprozessors 110 entspricht der Arbeitsweise des Mikroprozessors 110, wie er bereits im Zusammenhang mit der Figur 1 erläutert worden ist.

Auch die Arbeitsweise des Vergleichsbausteins 40 kann mit der Arbeitsweise des Vergleichsbausteins 40 gemäß Figur 1 identisch sein, so dass auf die obigen Ausführungen verwiesen sei.

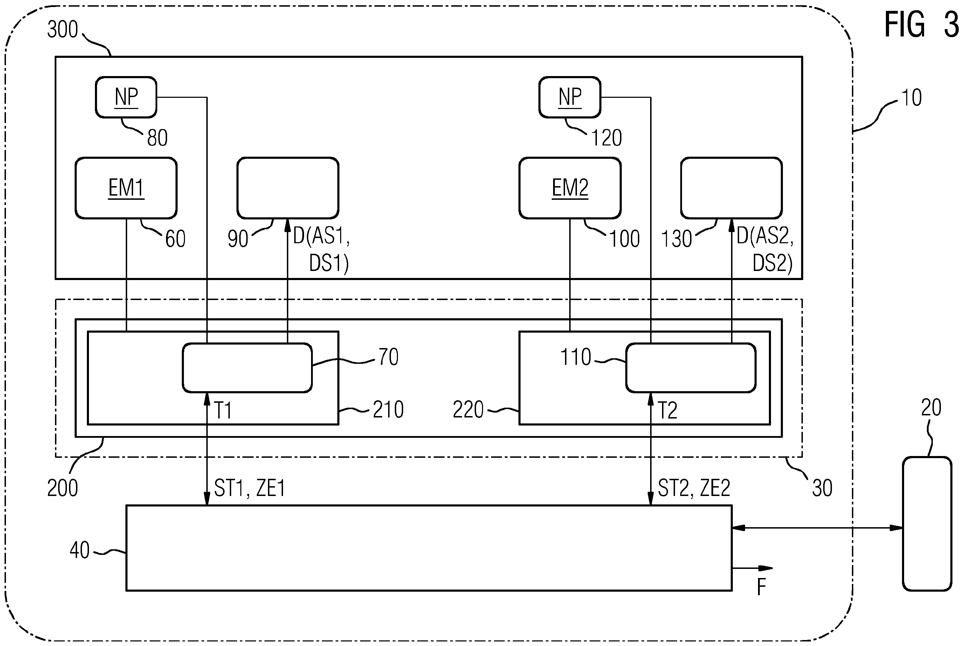

Die Figur 3 zeigt ein drittes Ausführungsbeispiel für eine Anordnung 10 zur Steuerung einer technischen Einrichtung 20. Bei diesem Ausführungsbeispiel steht ein Multikernprozessor 200, der mit zwei Prozessorkernen 210 und 220 ausgestaltet ist, mit einem einzigen Speichermodul 300 in Verbindung, in dem sechs Speicherbereiche 60, 80, 90, 100, 120 und 130 vorgesehen sind. Die Speicherbereiche entsprechen den Speicherbereichen 60, 80, 90, 100, 120 und 130 bei den Ausführungsbeispielen gemäß den Figuren 1 und 2, deren Funktionsweise bereits im Zusammenhang mit den Figuren 1 und 2 oben erläutert wurde.

Die beiden Prozessorkerne 210 und 220 werden auf das Speichermodul 300 bzw. auf die in dem Speichermodul 300 vorhandenen Speicherbereiche 60, 80, 90, 100, 120 und 130 zurückgreifen, um Mikroprozessoren 70 und 110 nachzubilden, wie dies bereits im Zusammenhang mit der Figur 2 erläutert wurde, und der Vergleichsbaustein 40 wird die Zwischenergebnisse ZE1 und ZE2 sowie auch die Steuersignale ST1 und ST2 der beiden nachgebildeten Mikroprozessoren 70 und 110 miteinander vergleichen. Im Übrigen sei auf die Ausführungen im Zusammenhang mit der Figur 2 verwiesen, die hier entsprechend gelten.

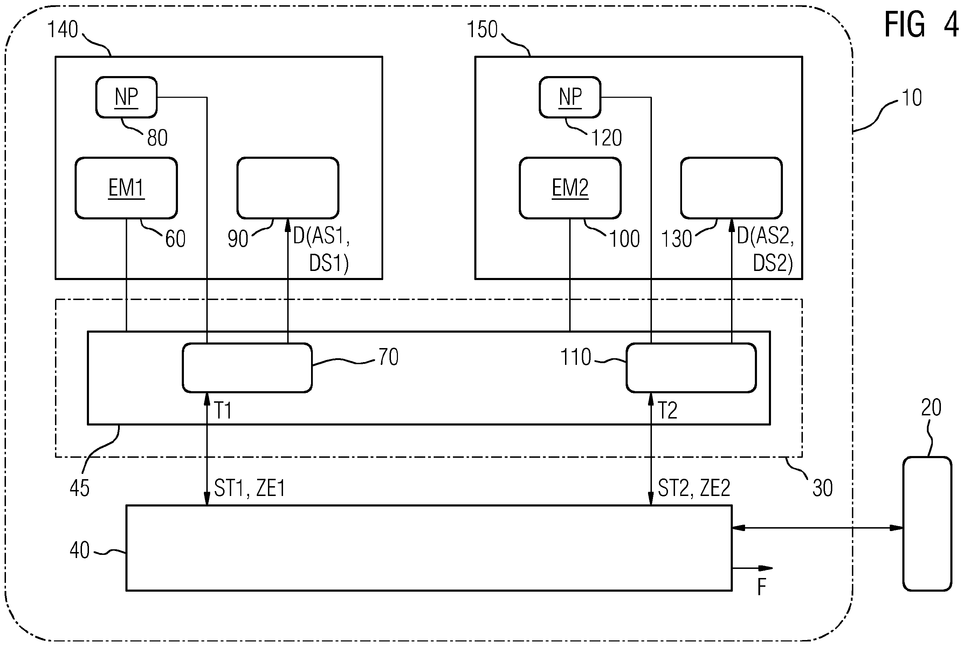

Die Figur 4 zeigt ein viertes Ausführungsbeispiel für eine erfindungsgemäße Anordnung 10. Bei diesem Ausführungsbeispiel umfasst das Mikroprozessorsystem 30 lediglich einen einzigen Prozessor 45, der zeitlich verschachtelt bzw. zeitlich parallel im Rahmen eines Multitasking-Verfahrens zwei Emulationsprogramme EM1 und EM2 ausführt, die in zwei Speicherbereichen 60 und 100 abgespeichert sind. Durch die Abarbeitung der beiden Emulationsprogramme EM1 und EM2 bildet der Prozessor 45 zwei Mikroprozessoren 70 und 110 nach, die unterschiedlich sind und das gleiche Nutzprogramm NP in unterschiedlicher Weise abarbeiten, wie dies bereits im Zusammenhang mit den Figuren 1 bis 3 im Detail erläutert worden ist.

Mit dem Mikroprozessorsystem 30 steht ein Vergleichsbaustein 40 in Verbindung, der die Zwischenergebnisse ZE1 und ZE2 bzw. die Steuersignale ST1 und ST2 der beiden nachgebildeten Mikroprozessoren 70 und 110 miteinander vergleicht. Falls die Zwischenergebnisse ZE1 und ZE2 oder die Steuersignale ST1 und ST2 unterschiedlich sind, wird die Steuerung der technischen Einrichtung 20 blockiert und ein Fehlersignal F erzeugt. Falls die Zwischenergebnisse ZE1 und ZE2 und die Steuersignale ST1 und ST2 gleich sind, wird die Steuerung der technischen Einrichtung 20 durch die Steuersignale ST1 und ST2 zugelassen. Im Übrigen gelten die Erläuterungen im Zusammenhang mit den Figuren 1 bis 3 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Anordnung
- 20: Einrichtung
- 30: Mikroprozessorsystem
- 40: Vergleichsbaustein
- 45: erster Prozessor
- 50: zweiter Prozessor
- 60: Speicherbereich
- 70: Mikroprozessor
- 80: Speicherbereich
- 90: Speicherbereich
- 100: Speicherbereich
- 110: Mikroprozessor
- 120: Speicherbereich
- 130: Speicherbereich
- 140: Speichermodul
- 150: Speichermodul
- 200: Multikernprozessor
- 210: erster Prozessorkern
- 220: zweiter Prozessorkern
- 300: Speichermodul

- AS1: erste Adressstruktur
- AS2: zweite Adressstruktur
- D(AS1, DS1): Daten
- DS1: erste Datenstruktur
- DS2: zweite Datenstruktur
- EM1: erstes Emulationsprogramm
- EM2: zweites Emulationsprogramm
- F: Fehlersignal
- NP: Nutzprogramm
- ST1: Steuersignal
- ST2: Steuersignal
- T1: Triggersignal
- T2: Triggersignal
- ZE1: Zwischenergebnis
- ZE2: Zwischenergebnis

## Patentansprüche

1. Anordnung (10) mit einem Mikroprozessorsystem (30), das derart programmiert ist, dass eine redundante Datenverarbeitung erfolgt, wobei das gleiche Nutzprogramm (NP) zumindest zweimal ausgeführt wird, und einem Vergleichsbaustein (40), der die Ergebnisse der zumindest zwei Programmausführungen miteinander vergleicht,
**dadurch gekennzeichnet, dass**
- das Mikroprozessorsystem (30) derart programmiert ist, dass auf diesem zumindest zwei Emulatoren (EM1, EM2) unterschiedliche Mikroprozessoren (70, 110) softwaremäßig nachbilden,
- jeder der zumindest zwei nachgebildeten Mikroprozessoren (70, 110) das gleiche Nutzprogramm (NP) mikroprozessorindividuell ausführt,
- die Ergebnisse der zumindest zwei nachgebildeten Mikroprozessoren (70, 110) mit dem Vergleichsbaustein (40) verglichen werden und
- die zumindest zwei Emulatoren (EM1, EM2) jeweils derart programmiert sind, dass die durch sie nachgebildeten Mikroprozessoren (70, 110) beim Abspeichern und Auslesen von Daten in oder aus einem Speicherbereich jeweils eine Adressstruktur (AS1, AS2) verwenden, die sich von der Adressstruktur (AS1, AS2) zumindest eines der anderen nachgebildeten Mikroprozessoren (70, 110), vorzugsweise von der Adressstruktur aller anderen nachgebildeten Mikroprozessoren (70, 110), unterscheidet, und jeweils eine Datenstruktur (DS1, DS2) verwenden, die sich von der Datenstruktur (DS1, DS2) zumindest eines der anderen nachgebildeten Mikroprozessoren (70, 110), vorzugsweise von der Datenstruktur aller anderen nachgebildeten Mikroprozessoren (70, 110), unterscheidet.

2. Anordnung (10) nach Anspruch 1,
**dadurch gekennzeichnet, dass** das Mikroprozessorsystem (30) durch einen Multikernprozessor (200) gebildet ist, der zumindest zwei Prozessorkerne (210, 220) aufweist.

3. Anordnung (10) nach Anspruch 2,
**dadurch gekennzeichnet, dass** die zumindest zwei Emulatoren (EM1, EM2) jeweils von einem individuell zugeordneten Prozessorkern (210, 220) ausgeführt werden.

4. Anordnung (10) nach Anspruch 3,
**dadurch gekennzeichnet, dass** die Prozessorkerne (210, 220), die einen Emulator ausführen, jeweils einen Mikroprozessor (70, 110) nachbilden, der sich von den nachgebildeten Mikroprozessoren (70, 110) eines jeden der anderen Prozessorkerne (210, 220) unterscheidet.

5. Anordnung (10) nach Anspruch 3 oder 4,
**dadurch gekennzeichnet, dass** die zumindest zwei Emulatoren (EM1, EM2) von den jeweils individuell zugeordneten Prozessorkernen (210, 220) parallel ausgeführt werden, jeweils in denselben vorgegebenen Zeitfenstern Eingangsparameter einlesen und jeweils in denselben vorgegebenen Zeitfenstern Ergebnisse an den Vergleichsbaustein (40) ausgeben.

6. Anordnung (10) nach einem der voranstehenden Ansprüche,
**dadurch gekennzeichnet, dass** die zumindest zwei Emulatoren (EM1, EM2) derart programmiert sind, dass sie einen regelmäßigen oder zyklischen Vergleich der Ergebnisse (ZE1, ZE2) der von ihnen nachgebildeten Mikroprozessoren (70, 110) durch den Vergleichsbaustein (40) ermöglichen.

7. Verfahren zum Betreiben einer Anordnung (10) mit einem Mikroprozessorsystem (30), wobei bei dem Verfahren eine redundante Datenverarbeitung erfolgt, indem das gleiche Nutzprogramm (NP) zumindest zweimal ausgeführt wird, und die Ergebnisse der zumindest zwei Programmausführungen mit einem Vergleichsbaustein (40) verglichen werden,
**dadurch gekennzeichnet, dass**
- mit dem Mikroprozessorsystem (30) zumindest zwei Emulatoren (EM1, EM2) betrieben werden und unterschiedliche Mikroprozessoren (70, 110) softwaremäßig nachgebildet werden,
- jeder der zumindest zwei nachgebildeten Mikroprozessoren (70, 110) das gleiche Nutzprogramm (NP) mikroprozessorindividuell ausführt,
- die Ergebnisse der zumindest zwei nachgebildeten Mikroprozessoren (70, 110) mit dem Vergleichsbaustein (40) verglichen werden und
- die zumindest zwei Emulatoren (EM1, EM2) jeweils derart programmiert bereitgestellt werden, dass die durch sie nachgebildeten Mikroprozessoren (70, 110) beim Abspeichern und Auslesen von Daten in oder aus einem Speicherbereich jeweils eine Adressstruktur (AS1, AS2) verwenden, die sich von der Adressstruktur (AS1, AS2) zumindest eines der anderen nachgebildeten Mikroprozessoren (70, 110), vorzugsweise von der Adressstruktur aller anderen nachgebildeten Mikroprozessoren (70, 110), unterscheidet, und jeweils eine Datenstruktur (DS1, DS2) verwenden, die sich von der Datenstruktur (DS1, DS2) zumindest eines der anderen nachgebildeten Mikroprozessoren (70, 110), vorzugsweise von der Datenstruktur aller anderen nachgebildeten Mikroprozessoren (70, 110), unterscheidet.

## Claims

1. Arrangement (10) with a microprocessor system (30), which is programmed so that a redundant data processing takes place, wherein the same useful program (NP) is executed at least twice, and a comparison module (40), which compares the results of the at least two program executions with one another,
**characterised in that**
- the microprocessor system (30) is programmed so that at least two emulators (EM1, EM2) use software to reproduce different microprocessors (70, 110) hereupon,
- each of the at least two reproduced microprocessors (70, 110) executes the same useful program (NP) in a manner individual to the microprocessor,
- the results of the at least two reproduced microprocessors (70, 110) are compared with the comparison module (40) and
- the at least two emulators (EM1, EM2) are programmed in each case so that the microprocessors (70, 110) reproduced thereby use an address structure (AS1, AS2) when data is stored in and read out from a storage region in each case, which address structure differs from the address structure (AS1, AS2) of at least one of the other reproduced microprocessors (70, 110), preferably from the address structure of all other reproduced microprocessors (70, 110), and in each case use a data structure (DS1, DS2), which differs from the data structure (DS1, DS2) of at least one of the other reproduced microprocessors (70, 110), preferably from the data structrue of all other reproduced microprocessors (70, 110).

2. Arrangement (10) according to claim 1,
**characterised in that**
the microprocessor system (30) is formed by a multicore processor (200), which has at least two processor cores (210, 220) .

3. Arrangement (10) according to claim 2,
**characterised in that**
the at least two emulators (EM1, EM2) are executed in each case by an individually assigned processor core (210, 220).

4. Arrangement (10) according to claim 3,
**characterised in that**
the processor cores (210, 220), which execute an emulator, reproduce a microprocessor (70, 110) in each case, which differs from the reproduced microprocessors (70, 110) of each of the other processor cores (210, 220).

5. Arrangement (10) according to claim 3 or 4, **characterised in that**
the at least two emulators (EM1, EM2) are executed in parallel by the processor cores (210, 220) assigned individually in each case, read input parameters into the same predetermined time frames in each case and output results to the comparison module (40) in the same predetermined time frames in each case.

6. Arrangement (10) according to one of the preceding claims,
**characterised in that**
the at least two emulators (EM1, EM2) are programmed so that they enable a regular or cyclical comparison of the results (ZE1, ZE2) of the microprocessors (70, 110) reproduced thereby by means of the comparison module (40).

7. Method for operating an arrangement (10) with a microprocessor system (30), wherein a redundant data processing is carried out in the method, by the same useful program (NP) being executed at least twice, and the results of the at least two program executions being compared with a comparison module (40),
**characterised in that**
- at least two emulators (EM1, EM2) are operated with the microprocessor system (30) and software is used to reproduce different microprocessors (70, 110),
- each of the at least two reproduced microprocessors (70, 110) executes the same useful program (NP) in a manner individual to the microprocessor,
- the results of the at least two reproduced microprocessors (70, 110) are compared with the comparison module (40) and
- the at least two emulators (EM1, EM2) are provided programmed in each case so that the microprocessors (70, 110) reproduced thereby use an address structure (AS1, AS2) when data is stored in or read out from a storage region in each case, which address structure differs from the address structure (AS1, AS2) of at least one of the other reproduced microprocessors (70, 110), preferably from the address structure of all other reproduced microprocessors (70, 110), and in each case use a data structure (DS1, DS2), which differs from the data structure (DS1, DS2) of at least one of the other reproduced microprocessors (70, 110), preferably from the data structrue of all other reproduced microprocessors (70, 110).

## Revendications

1. Ensemble (10) comprenant un système (30) de microprocesseur, qui est programmé de manière à effectuer un traitement redondant de données, dans lequel on utilise le même programme (NP) utile au moins deux fois, et un module (40) de comparaison, qui compare entre eux les résultats des au moins deux exécutions de programme,
**caractérisé en ce que**
- le système (30) à microprocesseur est programmé de façon à reproduire en logiciel sur celui-ci au moins deux émulateurs (EM1, EM2) de microprocesseur (70, 110) différents,
- chacun des au moins deux microprocesseurs (70, 110) reproduits exécute individuellement par processeur le même programme (NP) utile,
- les résultats des au moins deux microprocesseurs (70, 110) reproduits sont comparés par le module (40) de comparaison et
- les au moins deux émulateurs (EM1, EM2) sont programmés chacun de manière à ce que les microprocesseurs (70, 110) par eux reproduits utilisent à la mise en mémoire et à la lecture de données dans une partie de mémoire respectivement une structure (AS1, AS2) d'adresse, qui se distingue de la structure (AS1, AS2) d'adresse d'au moins l'un des autres microprocesseurs (70, 110) reproduits, de préférence de la structure d'adresse de tous les autres microprocesseurs (70, 110) reproduits, et utilise respectivement une structure (DS1, DS2) de données, qui se distingue de la structure (DS1, DS2) de données d'au moins l'un des autres microprocesseurs (70, 110), de préférence de la structure données de tous les autres microprocesseurs (70, 110) reproduits.

2. Dispositif (10) suivant la revendication 1,
**caractérisé en ce que**
le système (30) à microprocesseur est formé d'un processeur (200) à plusieurs noyaux, qui a au moins deux noyaux (210, 220) de processeur.

3. Dispositif (10) suivant la revendication 2,
**caractérisé en ce que**
les au moins deux émulateurs (EM1, EM2) sont réalisés chacun par un noyau (210, 220) de processeur associé individuellement.

4. Dispositif (10) suivant la revendication 3,
**caractérisé en ce que**
les noyaux (210, 220), qui réalisent un émulateur, reproduisent chacun un microprocesseur (70, 110) qui se distingue des microprocesseurs (70, 110) reproduits de chacun des autres noyaux (210, 220) de microprocesseur.

5. Dispositif (10) suivant la revendication 3 ou 4,
**caractérisé en ce que**
les au moins deux émulateurs (EM1, EM2) sont réalisés en parallèle par les noyaux (210, 220) de processeur associés respectivement individuellement, lisent respectivement dans le même créneau temporel donné à l'avance des paramètres d'entrée et émettent respectivement dans le même créneau temporel donné à l'avance des résultats sur le module (40) de comparaison.

6. Dispositif (10) suivant l'une des revendications précédentes,
**caractérisé en ce que**
les au moins deux émulateurs (EM1, EM2) sont programmés de manière à rendre possible par le module (40) de comparaison une comparaison régulière ou cyclique des résultats (ZE1, ZE2) des microprocesseurs (70, 110) par eux reproduits.

7. Procédé pour faire fonctionner un ensemble (10) comprenant un système (30) de microprocesseur, dans lequel il s'effectue dans le procédé un traitement redondant de données par le fait que le même programme (NP) utile est réalisé au moins deux fois, et les résultats des au moins deux exécutions de programme sont comparés à un module (40) de comparaison,
**caractérisé en ce que**
- on fait fonctionner par le système (30) à microprocesseur au moins deux émulateurs (EM1, EM2) et on reproduit en logiciel des microprocesseurs (70, 110) différents,
- les résultats des au moins deux microprocesseurs (70, 110) reproduits sont comparés par le module (40) de comparaison,
- on met à disposition les au moins deux émulateurs (EM1, EM2) respectivement programmés de manière à ce que les microprocesseurs (70, 110) par eux reproduits utilisent à la mise en mémoire et à la lecture de données dans une partie de mémoire respectivement une structure (AS1, AS2) d'adresse qui se distingue de la structure (AS1, AS2) d'adresse d'au moins l'un des autres microprocesseurs (70, 110) reproduits, de préférence de la structure d'adresse de tous les autres microprocesseurs (70, 110) reproduits et utilise respectivement une structure (DS1, DS2) de données qui se distingue de la structure (DS1, DS2) de données d'au moins l'un des autres microprocesseurs (70, 110), de préférence de la structure données de tous les autres microprocesseurs (70, 110) reproduits.
